(19)

Europäisches Patentamt
European Patent Office
Office européen des brevets

(11) EP 2 570 986 A1

(12) EUROPEAN PATENT APPLICATION

(43) Date of publication:
20.03.2013 Bulletin 2013/12

(51) Int Cl.:
G06T 1/00 (2006.01)      G06T 19/20 (2011.01)

(21) Application number: 11290406.5

(22) Date of filing: 13.09.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Alcatel Lucent
75007 Paris (FR)

(72) Inventors:
• Zontrop, Pascal
3200 Aarschot (BE)
• Van Herreweghe, Hans
2520 Oelegem (BE)

(74) Representative: D'Halleweyn, Nele Veerle Trees
Gertrudis et al
Arnold & Siedsma
Sweelinckplein 1
2517 GK Den Haag (NL)

(54) **Method for creating a cover for an electronic device and electronic device**

(57)    Method for creating a camouflage cover for an electronic device having one or more components, said electronic device being intended to be arranged at a location, said method comprising: capturing an image including said location; obtaining size data of at least an area shown in the image, said area including said location; providing said electronic device with a display adapted for substantially hiding said one or more components of said electronic device when arranged at said location; said display having a display size; determining a digital camouflage pattern based on the captured image, the size data and the display size; displaying said digital camouflage pattern on said display so that a camouflage cover is obtained for the electronic device.

FIG. 1

EP 2 570 986 A1

**Description**

Technical field

The field of the invention relates to methods for creating a cover for an electronic device and to the field of electronic devices.

The present invention relates in particular to a method for creating a camouflage cover for an electronic device, to a computer medium storing programming code for performing one or more steps of such a method, to a time-of-flight camera for using such a method, and to an electronic device using such a camouflage cover.

Background

Internet of Things is a technical field where objects, such as a wall or a piece of furniture, may be augmented by adding a sensing device and/or an actuating device and/or a communication device, etc. By adding such electronic devices to an object, the properties of the object can be e.g. measured, and/or shared, and/or changed. When such electronic devices are clearly visible to a person, this person may feel less comfortable in the environment, which is often due to e.g. blinking LEDs and/or privacy invading looks. In the prior art there exist solutions which partly address this problem by including the electronic devices in a housing with a nice shape. However, such a solution still has the disadvantage that the device is clearly visible.

Summary

The object of embodiments of the present invention is to provide a method for creating a camouflage cover for an electronic device to make such a device less visible.

To that end an embodiment the method of the invention is distinguished in that it comprises the following steps. An image of an object or a part of an object including the location where the electronic device is to be arranged, is captured. Size data of at least an area shown in the image, and including the location, is obtained. The electronic device is provided with a display adapted for substantially hiding the one or more electronic components of the electronic device when arranged at the location. Based on the captured image, the size data and the display size of the display, a digital camouflage pattern is determined. This digital camouflage pattern is displayed on the display so that the display forms a camouflage cover for the electronic device.

Note that the size data of at least an area including the location, concerns the real size of this area, and not the size of the representation of this area in the image. In other words, if the object is e.g. a cupboard, then the area could correspond to a part of the cupboard, and the size data would then concern the real size of this part of the cupboard. Through the use of the captured image, the size data and the display size of the display, there can be derived a digital camouflage pattern adapted to be shown on the display with the known display size, wherein the pattern is substantially identical to the "real pattern" at the location where the electronic device is to be arranged. In that way the environment where the electronic device is arranged is not disturbed by the presence of the electronic device.

According to a preferred embodiment the determining of a digital camouflage pattern comprises cutting out a part of the capture image, wherein this part is made to correspond, using the distance data, with a sub-area having a size corresponding with the display size. In that way the pixels of the cut-out part can be used to create the digital camouflage pattern which, when displayed on the display, substantially corresponds with the sub-area below it, so that the sight of the environment where the electronic device is placed will not be altered. In that way a person will not notice the presence of the electronic device in the environment.

According to a preferred embodiment the capturing of the image and the obtaining of size data is performed through the use of a time-of-flight camera. Such a camera allows capturing an image together with a distance map containing the distance between the camera and every pixel of the image. Such a distance map will allow to derive size data of the area shown in the image.

According to another possible embodiment the obtaining of size data comprises adding a device with a known size to the area before capturing the image, and obtaining the size data using the known size shown in the image. E.g., if it is desirable to arrange the electronic device on a cupboard, a shape having a known size could be stuck on the cupboard before capturing an image of the cupboard. In that way the size data of an area of the cupboard including the location where the electronic device is to be arranged, can be calculated.

According to a preferred embodiment, before determining the digital camouflage pattern, the user is given the possibility to select a portion of the image to indicate the location where the electronic device is to be arranged. The selected portion is then taken into account when creating the digital camouflage pattern. Note that such a user selection is not a requirement for the method of the invention, and that such a portion could e.g. be automatically selected, by selecting e.g. the centre of the picture. Further, a suitable sub-area could be determined through image processing techniques. Also, other methods are possible, see further.

According to a preferred embodiment, during the capturing of the image, a selector window for selecting a portion of the image is shown to a user, such that the user can capture an image and at the same select a portion of said image to indicate the location where the electronic device is to be arranged. In such an embodiment, the selector window is preferably is preferably such that it surrounds a part of the image corresponding with a sub-area having a size which is substantially identical to the display size. In that way a user can in a simple manner select exactly the location where he wishes to arrange the electronic device, and obtain a digital camouflage pattern corresponding with this sub-area.

According to a further developed embodiment, where a time-of-flight camera is used, the time-of-flight camera obtains a distance map comprising distance data for at least a part of the image visible through a viewport of the camera, and a selector window is calculated using said distance data such that the selector window corresponds with a sub-area having a size corresponding with the display size. Indeed, the distance data of the distance map will allow a calculation of a real size of a sub-area, such that a suitable sub-area having a size corresponding with the display size, can be determined, whereupon a corresponding selector window can be shown to the user.

According to a further developed embodiment, the display resolution is used when determining the digital camouflage pattern. Note that it is also possible to determine a digital camouflage pattern without knowing the display resolution, whereupon, if needed, the resolution of the digital camouflage pattern can be adjusted to the display resolution of the used display.

The invention further relates to a computer medium, e.g. a computer, a mobile device such as a PDA, an I-phone or an I-pad, a laptop, a desktop, storing programming code for performing one or more steps of the embodiments of the methods disclosed above. Also the invention relates to a time-of-flight camera storing programming code for performing one or more steps of the embodiments of the methods disclosed above.

Further, the invention relates to a time-of-flight camera comprising capturing means for capturing an image; size data obtaining means for obtaining size data of at least an area shown in the image; and determining means for determining a digital camouflage pattern based on the captured image, the size data and the display size. According to a preferred embodiment of such a time-of-flight camera the determining means may be further adapted to show a selector window in the view seen through the viewport, such that, when an image is captured by the capturing means, the selector window indicates a portion of said image to be used by the determining means. This selector window may further be generated according to any of the embodiments disclosed above in connection with the embodiments of the invention.

Finally, the invention relates to an electronic device intended to be arranged at the location of an object, comprising a display screen having a display size, a storage and one or more electronic components. The display screen is adapted for substantially hiding the one or more electronic components and arranged at the location. The electronic device further comprises a storage storing a digital camouflage pattern which substantially corresponds with a part of a captured image of the object, and which is used for display on said display screen.

According to a preferred embodiment, the electronic device comprises any one or more of the following components: a sensing device, an actuating device, a processor, communication means, an assembling component, a receiving component.

Brief description of the figures

The accompanying drawings are used to illustrate presently preferred non-limiting exemplary embodiments of methods and devices of the present invention. The above and other advantages of features and objects of the invention will become more apparent and the invention will be better understood from the following detailed description when read in conjunction with the accompanying drawings in which:

Figure 1 is a schematic drawing illustrating an embodiment of the method of the invention;
Figure 2 is a flowchart illustrating the steps performed by an embodiment of a camouflage creator of the invention;
Figure 3 illustrates an image map which can be used in an embodiment of the method of the invention;
Figure 4 illustrates how the size of an object or area can be calculated in an embodiment of the method of the invention; and
Figures 5, 6A-6B and 7 illustrate a more detailed embodiment of the method of the invention.

Description of embodiments

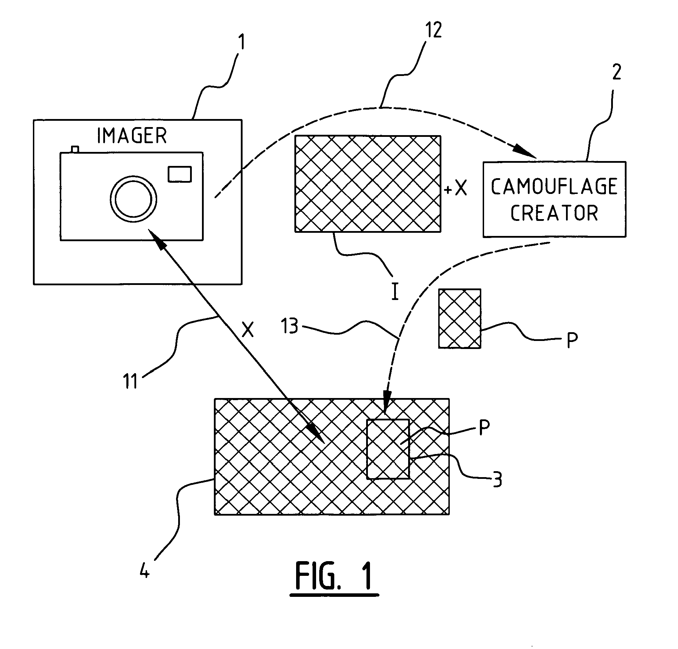

An embodiment of the method of the invention for creating a camouflage cover for an electronic device is illustrated in figure 1. It is assumed that it is desirable to mount an electronic device 3 on an object 4. This object can e.g. be a wall, a cupboard, etc. In the shown example the object 4 has a checkered pattern, but it will be understood that this object can have any pattern or can also be painted in a single color.

In a first step, an imaging device 1 is used to obtain an image I of the area including the location where it is desirable to mount the electronic device 3. According to a preferred embodiment, the imaging device is a time-of-flight camera which captures an image I and determines distance data X between the object 4 and the camera for every pixel of the image I. This image I as well as the distance data X, typically in the form of a distance map, is sent to a camouflage creator 2, see arrow 12.

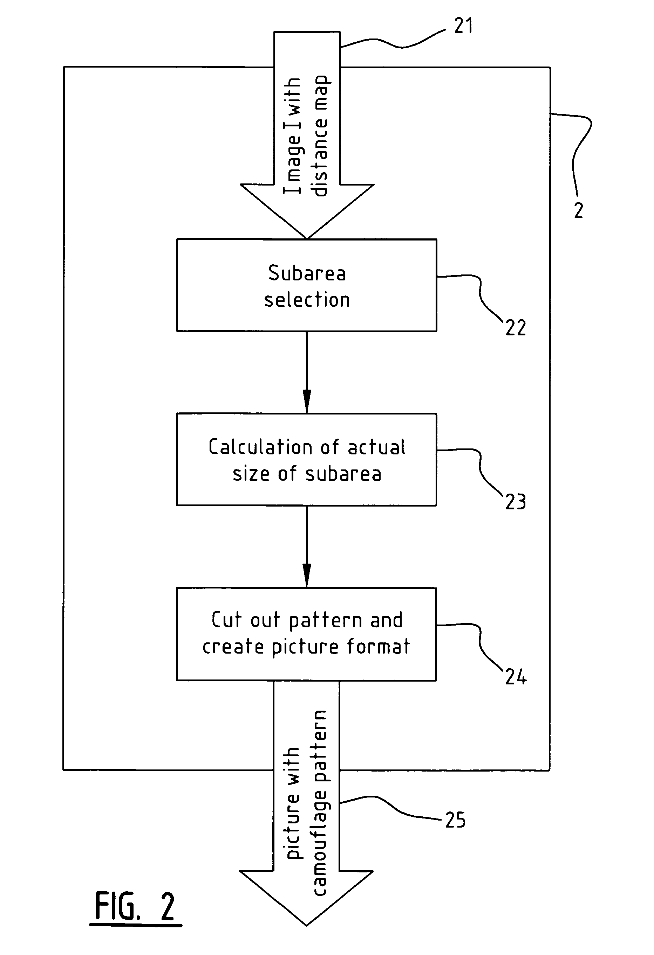

The camouflage creator 2 can be implemented in the form of software installed on a computing means such as a mobile device (e.g. I-phone or I-pad), a laptop, a desktop, etc., but could also be implemented directly in the time-of-flight camera. The operation of the camouflage creator 2 is illustrated in detail in figure 2. In a first step 22 a portion of the image is selected, wherein this portion corresponds with a sub-area in which the electronic device is going to be mounted. This selection can be done in many different ways, such as:

- selecting the centre of the picture;
- letting a user select a sub-area with an input device such as a touch screen, a mouse or a keyboard;
- determining a suitable sub-area through image processing techniques;
- placing a marking window around the sub-area before or while taking the picture;
- etc.

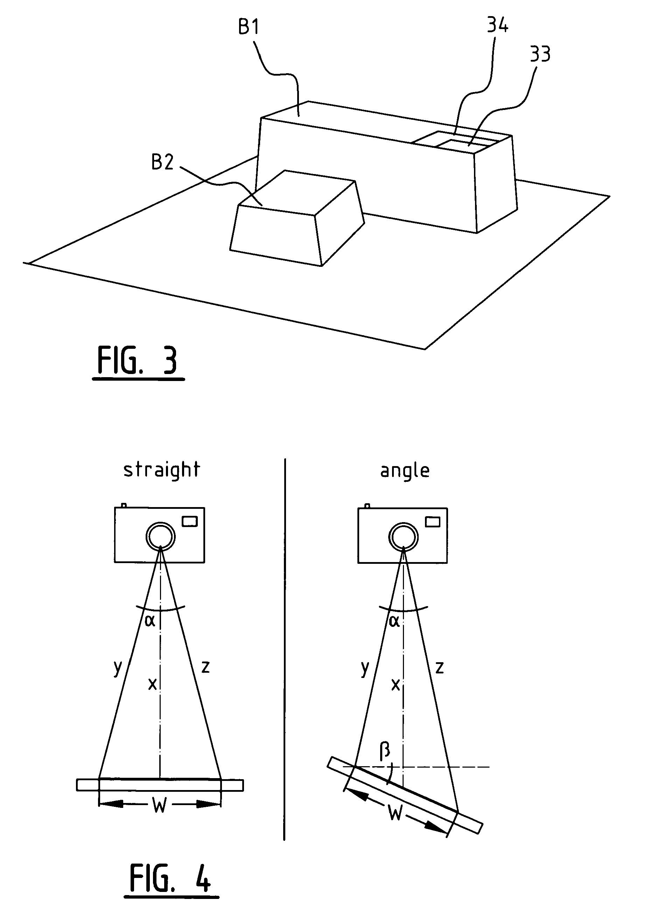

In a second step 23 the actual size of the sub-area is calculated using the distance data. Figure 3 illustrates an example of a distance map corresponding with an image. In the example of figure 3 the object 4 is not a flat surface but contains two blocks B1 and B2. In this example, a portion 34 is selected. Using the distance data included in the distance map, the actual size of the sub-area corresponding with portion 34 can be calculated.

The calculation of the actual size of the sub-area can e.g. be done by overlaying the selected sub-area with the image map, see sub-area 34 in figure 3, and by determining the angle P of the object. As illustrated in figure 4, if the picture is taken exactly at a straight angle, the calculation of the actual size is the easiest, and a width dimension W of a sub-area can simply be calculated using the tangent of the angle $(\alpha/2)$: $W = 2x \tan (\alpha/2)$. In a similar way a length dimension can be calculated. For a well calibrated camera the angle a is known for a width dimension and a length dimension of the complete picture. By scaling of the angles for the complete picture, the angle a for a width dimension and a length dimension of a sub-area of the complete picture can be calculated.

In practice the picture is typically not taken at a straight angle, and then there needs to be made a more complex calculation where the angle $\beta$, see the drawing on the right side of figure 4, needs to be resolved to derive the size of the object and to know how the camouflage creator needs to stretch or shrink the aspect ratio of the picture. The actual size of the sub-area can e.g. be calculated in centimeters or in number of pixels. If the number of pixels is used, then it is assumed that there are a fixed number of pixels per square centimeter. For the not straight case a width dimension can e.g. be calculated as follows:

$$W = 2y \sin (\alpha/2) \cos \beta + (z - y) \cos (90° - \beta - \alpha/2)$$

where $1/\tan \beta = y \sin (\alpha/2) / (x - y \cos (\alpha/2))$, and the angle $\alpha$ is known or calculated by scaling for a well calibrated camera as explained above.

Knowing the actual size of the sub-area, and the size and resolution of the display screen, the pixels needed for the camouflage pattern can be cut out and a camouflage pattern picture can be created to be used on the display screen, see steps 24 and 25 in figure 2.

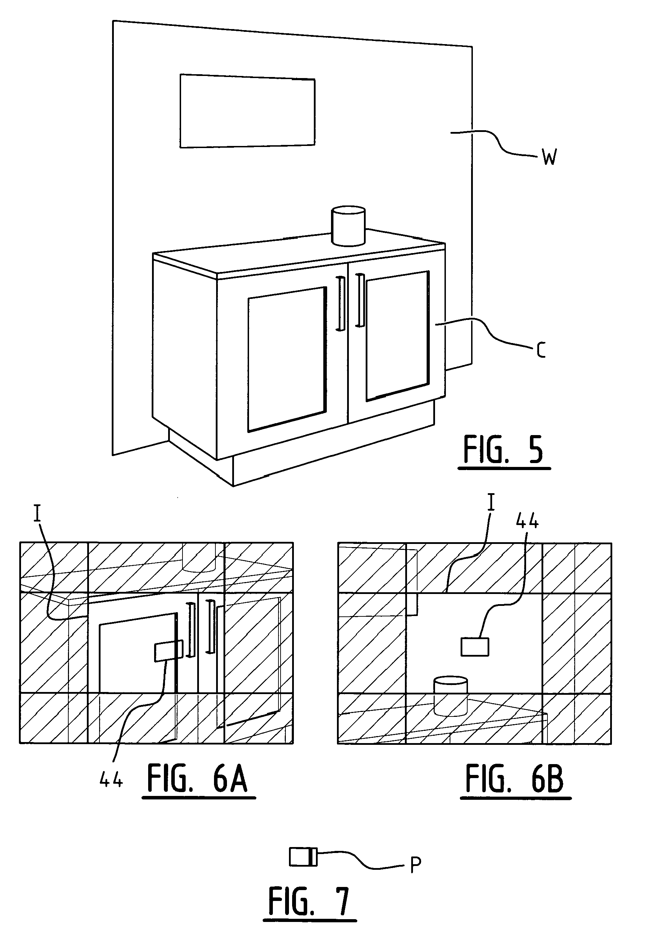

Now a more detailed embodiment of the method of the invention will be illustrated with reference to figures 5, 6A-6B and figure 7. In this embodiment a specially adapted time-of-flight camera is used. The time-of-flight camera may be adapted to run the camouflage creator in real time while the user is scanning the room to take a picture of the area where the electronic device needs to be arranged. For this example it is assumed that the user is in a room containing a cupboard C and a wall W as shown in figure 5. The time-of-flight camera is adapted to show the user, when looking through the viewport of his camera, a window 44 in the middle of his screen. The window 44 corresponds with a possible location for mounting the electronic device. The camera may be further adapted to change the size and shape of the window 44 to resemble the display screen in the mounted situation. The calculation of the shape and size of the selector window is done using the distance map which the camera is continuously receiving. The selector window is illustrated in figures 6A and 6B. In the example of figure 6A the camera is directed to the cupboard C under an angle, and a frame 44 shown in the viewport has a parallelogram shape with sides parallel to the sides of the cupboard. By using the distance map, the frame is made to correspond to the contour of the display screen in the mounted position. After taking the picture in the position illustrated in figure 6A, the portion corresponding with window 44 is cut out and resized and reshaped in order to obtain the camouflage pattern P for display on the display screen of the electronic device, see figure 7. The digital camouflage pattern illustrated in figure 7 can then be used for display on a display screen provided on top of the electronic device.

An electronic device for use with the invention can be any type of electronic device, and in particular a sensing device, an actuating device, a combination of a sensing and actuating device, etc. Typically such a device is provided with a processor and a sending/receiving means. Further there should be provided a storage means for storing the digital camouflage pattern which is to be shown on the display screen. The display screen is preferably sufficiently large to hide the electronic components of the electronic device, i.e. the components of the electronic device will be provided at the backside of the display screen. In that way, in the mounted position, the components will be located between the object on which the electronic device is mounted and the display screen which is visible for a user.

Where prior art solutions consist in giving an esthetical form to such electronic devices or in making those devices very small and hence expensive, the solution of the present invention has the advantage that the electronic device does not need to be made very small and is less visible then the electronic devices of the prior art solutions. Further, making computing power ubiquitous is an important factor for the so-called Internet of Things or smart devices, where many smart devices such as sensing or actuating devices are used. Through the use of the present invention, the form factor of such electronic devices will be less obtrusive such that it is ideal suitable for home applications.

Whilst the principles of the invention have been set out above in connection with specific embodiments, it is to be understood that this description is merely made by way of example and not as a limitation of the scope of protection which is determined by the appended claims.

**Claims**

1. Method for creating a camouflage cover for an electronic device having one or more components, said electronic device being intended to be arranged at a location, said method comprising:

   capturing an image including said location;
   obtaining size data of at least an area shown in the image, said area including said location;
   providing said electronic device with a display adapted for substantially hiding said one or more components of said electronic device when arranged at said location; said display having a display size;
   determining a digital camouflage pattern based on the captured image, the size data and the display size;
   displaying said digital camouflage pattern on said display so that a camouflage cover is obtained for the electronic device.

2. Method of claim 1, wherein the determining of a digital camouflage pattern based on the captured image, the size data and the display size comprises cutting out a part of the captured image said part being determined, using the distance data, to correspond with a subarea having a size corresponding with the display size.

3. Method of claim 1 or 2, wherein the capturing of the image and the obtaining of size data uses a time-of-flight camera.

4. Method of claim 1 or 2, wherein the obtaining of size data comprises adding a device with a known size to the area before capturing the image, and obtaining the size data using the known size in the image.

5. Method of any of the previous claims, wherein before the determining of a digital camouflage pattern, the user is selecting a portion of said image to indicate the location where the electronic device is to be arranged, and wherein said creating of a digital camouflage pattern further uses said portion for creating the digital camouflage pattern.

6. Method of any of the previous claims, wherein during the capturing of the image a selector window for selecting a portion of the image is shown to a user, such that a user can capture an image and at the same time can select a portion of said image to indicate the location where the electronic device is to be arranged.

7. Method of claim 6, wherein the selector window is such that it surrounds a part of the image corresponding with a subarea having a size corresponding with the display size.

8. Method of claim 3 and 6, wherein the time-of-flight camera obtains a distance map comprising distance data for at least a part of the image visible through a viewport of the camera, and wherein the selector window is calculated using said distance data such that it corresponds with a subarea having a size corresponding with the display size.

9. Method of any of the claims 1-8, wherein the display has a display resolution and wherein the determining of a digital camouflage pattern is further using said display resolution.

10. Computer medium storing programming code for performing one or more of the steps of the method of any of the claims 1-9.

11. Time-of-flight camera storing programming code for performing one or more of the steps of the method of any of the claims 1-9.

12. Time-of-flight camera for creating a camouflage pattern for use in an electronic device having a display with a display size, said camera comprising:

capturing means for capturing an image;
size data obtaining means for obtaining size data of at least an area shown in the image;
determining means for determining a digital camouflage pattern based on the captured image, the size data and the display size.

13. Time-of-flight camera of claim 12, further comprising a viewport, wherein the determining means are further adapted to show a selector window in the view seen through the viewport, such that, when an image is captured by the capturing means, the selector window indicates a portion of said image to be used by the determining means.

14. Electronic device intended to be arranged at a location of an object or area, comprising a display screen having a display size, a storage and one or more electronic components,
wherein said display screen is adapted for substantially hiding the one or more electronic components of said electronic device when arranged at said location,
wherein said storage is storing a digital camouflage pattern which substantially corresponds with a part of a captured image of the object or area; said digital camouflage pattern being adapted for display on the display screen.

15. Electronic device of claim 14, wherein said one or more electronic components include any one or more of the following components: a sensing device, an actuating device, a processor, a sending component, a receiving component, communication means.

<u>FIG. 1</u>

21

Image I with distance map

Subarea
selection

22

Calculation of actual
size of subarea

23

Cut out pattern and
create picture format

24

picture with
camouflage pattern

25

2

## FIG. 2

FIG. 3

FIG. 4

FIG. 5

44 FIG. 6A

FIG. 6B

FIG. 7

Europäisches
Patentamt

European
Patent Office

Office européen
des brevets

# EUROPEAN SEARCH REPORT

Application Number

EP 11 29 0406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 307 162 A (SCHOWENGERDT RICHARD N [US]) 26 April 1994 (1994-04-26) * column 1, line 25 - column 2, line 57 * | 1,4-7,9, 10,14,15 | INV. G06T1/00 G06T19/20 |
| X | US 2002/117605 A1 (ALDEN RAY M [US]) 29 August 2002 (2002-08-29) | 1,4-7,9, 10,14,15 | |
| Y | * paragraphs [0002], [0005], [0007] * | 2,3,8, 11-13 | |
| Y | REINHARD KOCH ET AL: "MixIn3D: 3D Mixed Reality with ToF-Camera", 9 September 2009 (2009-09-09), DYNAMIC 3D IMAGING, SPRINGER BERLIN HEIDELBERG, BERLIN, HEIDELBERG, PAGE(S) 126 - 141, XP019126928, ISBN: 978-3-642-03777-1 * the whole document * | 3,8, 11-13 | |
| Y | KITAHARA I ET AL: "Stealth vision for protecting privacy", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, vol. 4, 23 August 2004 (2004-08-23), pages 404-407, XP010723946, DOI: 10.1109/ICPR.2004.1333788 ISBN: 978-0-7695-2128-2 * the whole document * | 2 | TECHNICAL FIELDS SEARCHED (IPC)  G06T G02B |
| A | US 7 511 631 B1 (BRESLAU FRANKLIN C [US] ET AL) 31 March 2009 (2009-03-31) * the whole document * | 1,10,14 | |

-/--

The present search report has been drawn up for all claims

| Place of search | Date of completion of the search | Examiner |
|---|---|---|
| The Hague | 28 February 2012 | Ogor, Mariëlle |

EPO FORM 1503 03.82 (P04C01)

**EUROPEAN SEARCH REPORT**

Europäisches
Patentamt

European
Patent Office

Office européen
des brevets

Application Number

EP 11 29 0406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Wikipedia: "Active Camouflage", , 1 November 2011 (2011-11-01), pages 1-3, XP002665874, Retrieved from the Internet: URL:http://en.wikipedia.org/wiki/Active_ca mouflage [retrieved on 2011-12-15] ----- | | |
| A | Seattle Andrew Reviews: "Through the looking glass: transparent/mirror live wallpaper", , 6 February 2011 (2011-02-06), 6 February 2011 (2011-02-06), page 2, XP002665875, Retrieved from the Internet: URL:http://reviews.seattleandrew.com/2011/ 02/through-looking-glass-transparent.html [retrieved on 2011-12-15] * the whole document * ----- | 1,10,14 | |
| A | "Transparent screens", Digital bus stops , 12 January 2011 (2011-01-12), pages 1-4, XP002665876, Retrieved from the Internet: URL:http://www.digitalbusstop.com/transpar ent-screens/ [retrieved on 2011-12-15] * pages 1-4 * ----- | 1,10,14 | TECHNICAL FIELDS SEARCHED (IPC) |

The present search report has been drawn up for all claims

| Place of search | Date of completion of the search | Examiner |
|---|---|---|
| The Hague | 28 February 2012 | Ogor, Mariëlle |

EPO FORM 1503 03.82 (P04C01)

**EP 2 570 986 A1**

## ANNEX TO THE EUROPEAN SEARCH REPORT
## ON EUROPEAN PATENT APPLICATION NO.

EP 11 29 0406

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2012

| Patent document cited in search report | | Publication date | Patent family member(s) | | Publication date |
|---|---|---|---|---|---|
| US 5307162 | A | 26-04-1994 | NONE | | |
| US 2002117605 | A1 | 29-08-2002 | US | 2002117605 A1 | 29-08-2002 |
| | | | US | 2006131478 A1 | 22-06-2006 |
| US 7511631 | B1 | 31-03-2009 | NONE | | |

For more details about this annex : see Official Journal of the European Patent Office, No. 12/82

EPO FORM P0459

13